# EUROPEAN PATENT APPLICATION

(11) **EP 4 794 036 A1**
(43) Date of publication of application: **19.08.2026**
(21) Application number: 25157468.7
(22) Date of filing: 12.02.2025
(51) Int. Cl.: H01M 8/248, H01M 8/2483, H01M 8/2485

(54) **FUEL CELL STACK ASSEMBLY**

(71) Applicant: PowerCell Sweden AB, 418 34 Göteborg (SE)
(72) Inventor: BODÉN, Andreas, 43370 Sävedale (SE); EKBLAD, Oskar, 41127 Gothenburg (SE); GUSTAFSSON, Anton, 41326 Gothenburg (SE); VELEN, Robin, 43653 Hovas (SE)
(74) Representative: Seifert, Ruth

(57) **Abstract**

Fuel cell stack assembly (1) comprising at least an assembled fuel cell stack (2) having at least a first endplate (8-1) and a second endplate (8-2) sandwiching a plurality of unit fuel cells, wherein each unit fuel cell comprises a membrane electrode assembly and a bipolar plate, and wherein the first end plate (8-1) has at least one connection element (10) through which a medium for operating the fuel cell stack is guided to or from the fuel cell stack (2), wherein the fuel cell stack assembly further comprises an adapter plate for providing a fluid connection between a medium duct and the first endplate.

## Description

The present invention relates to a fuel cell stack assembly.

Fuel cells allow a hydrogen-containing fuel gas and an oxygen-containing reactant gas such as air to electrochemically react with each other, so that electric power is produced. The fuel cell is basically structured with a membrane that selectively transports hydrogen ions and is sandwiched between two electrodes, i.e. an anode and a cathode. The assembly of membrane and the electrodes is usually referred to as membrane electrode assembly ("MEA"). A fuel cell stack usually comprises a plurality of stacked membrane electrode assemblies, which are separated by bipolar plates.

The bipolar plates are electrically conductive separators for mechanically clamping the MEA, and for establishing electrical connection in series between adjacent MEAs. Each bipolar plate comprises a plurality of gas flow channels for supplying the corresponding electrode with the fuel gas and the reactant gas and carrying away the generated water or excess gas. A structure body in which the MEAs are clamped between the bipolar plates is referred to as the unit fuel cell.

The fuel cell stack is provided with endplates at both ends, which sandwich the fuel cell stack and are clamped together by clamping means. Also, the stack is equipped with connecting elements that extend into the stack to supply different media such as hydrogen, air, coolant, and the like to and from the stack.

Generally, the stack is installed into a support structure or coupling unit having connection counter elements which interact with the connection elements of the fuel cell stack. The support structure is further adapted to support the fuel cell stack and other components of a fuel cell operation system. The support structure can be e.g. a media providing baseplate.

For installing the stack into the support structure, it is necessary that the connection and counter connection elements fit to each other. This in turn requires that for each application and each system the design of the fuel cell stack and the design of the support structure need to be aligned. A simple retrofitting of an existing fuel cell system with an improved fuel cell stack is therefore not possible without adapting either the stack or the support structure and thereby also the system.

It is therefore object of the present invention to provide a fuel cell stack assembly that allows for a quick and easy installation and removal of a fuel cell stack into a system while providing a secure leak tight seal that is not sensitive to vibration or thermal movements.

This object is solved by a fuel cell stack assembly according to claim 1.

In the following, a fuel cell stack assembly is provided that comprises at least an assembled fuel cell stack. The assembled fuel cell stack has at least a first endplate and a second endplate sandwiching a plurality of unit fuel cells, wherein each unit fuel cell comprises a membrane electrode assembly and a bipolar plate. Further, at least the first endplate, the second endplate and the plurality of unit fuel cells are clamped together by at least one clamping means for forming the assembled fuel cell stack.

Additionally, the first end plate has at least one connection element through which a medium for operating the fuel cell stack is guided to or from the fuel cell stack. Preferably, the plurality of unit fuel cells is stacked in a stacking direction.

Furthermore, the fuel cell stack assembly comprises an adapter plate for providing a fluid connection between a medium duct (and eventually a medium reservoir) and the first endplate. The adapter plate has at least one connection counter element corresponding to at least the connection element of the first endplate, wherein the connection element and the connection counter element are adapted to fit into each other in such a way that they are engaged by friction fit and/or form fit.

Thus, the connection element and the corresponding connection counter element are inserted into each other and are not arranged face to face as known form the state of the art, thereby fitting snuggly into each other and providing a fluid tight seal.

Usually, the first endplate of the fuel cell stack comprises six connection elements, a hydrogen inlet connection element, a hydrogen outlet connection element, an oxidizing agent inlet connection element, an oxidizing agent outlet connection element, a coolant inlet connection element and a coolant outlet connection element. Correspondingly, there are also six connection counter elements, namely a hydrogen inlet connection counter element, a hydrogen outlet connection counter element, an oxidizing agent inlet connection counter element, an oxidizing agent outlet connection counter element, a coolant inlet connection counter element and a coolant outlet connection counter element.

Additionally, each connection counter element has a first connection counter element part, a second connection counter element part and a third connection counter element part, wherein the first connection counter element part is adapted to engage by friction fit and/or form fit with the connection element of the first endplate, the second connection counter element part is adapted to be connected to a medium guiding device, e.g. a hose, for supplying media to and removing media from the fuel cell stack, or to a media providing baseplate having at least one port which is adapted to be connected to the corresponding second connection counter element part for supplying media to and removing media from the fuel cell stack, and the third connection counter element part is adapted to link the first and second connection counter element parts.

The adapter plate allows for linking the first endplate of the fuel cell stack to any kind of media guiding device or media providing baseplate in an easy and quick way. Thereby, it is also possible to connect a one-sized endplate of the assembled fuel cell stack to different sized media providing baseplates or different sized guiding devices. This allows for a one-size fuel cell stack, which can be mounted into different kinds of applications without amending the fuel cell stack. This also allows for retrofitting existing systems with improved fuel cell stacks without changing the application/system set up.

The use of the adapter plate is particularly advantageous when the fuel cell stack is supposed to be connected to a media providing baseplate. The media providing baseplate may be part of a support structure which is adapted to support the fuel cell stack and other components of a fuel cell operation system. The media providing baseplate may also be pre-installed in an application, e.g. in a vehicle, such as a ship, plane, train or automobile. The media providing baseplate may also be equipped with additional components for operating and controlling the fuel cell stack, e.g. valves for opening and closing the ports of the media providing baseplate or electrical components for electrically coupling or decoupling of the fuel cell stack to a consumer.

For connecting the assembled fuel cell stack to a differently sized media providing baseplate or to any other differently sized media guiding device an embodiment is preferred, wherein the first connection counter element part has a first diameter and the second connection counter element part has a second diameter, wherein the first and second diameter differ from each other.

Alternatively or additionally, it is also possible that the first connection counter element part has a first shape and the second connection counter element part has a second shape, wherein the first and second shape differ from each other.

This allows for connecting the assembled fuel cell stack to media providing devices or baseplates which have different sized or shaped connecting elements or ports.

According to a further preferred embodiment, the first connection counter element part and the second connection counter element part are offset to each other and the third connection counter element part extends angled through the adapter plate. This also allows for connecting the endplate of the assembled fuel cell stack to different sized media providing baseplates by only changing the adapter plate.

It should be noted that all connection elements and/or corresponding connection counter elements of the same endplate/adapter plate/baseplate may be designed in the same way, but it is also possible that the connection elements/connection counter elements of the same endplate/adapter plate/baseplate differ from each other.

It is further preferred that at least one of the first and second connection counter element parts is designed as nozzles, and the third connection counter element part is designed as channel-like tunnel linking the first and second connection counter element parts.

This has the advantage that introducing the nozzle into a connecting element designed as opening, the nozzle may create a radial seal against the opening walls such that the connection between the nozzle and the opening is fluid tight. In addition, a seal element such as an O-ring may be provided on the nozzle or in the opening which further increases the fluid tightness.

Further, an embodiment is preferred, wherein at least one of the connection elements of the first endplate is an opening and the corresponding first connection counter element of the adapter plate is a nozzle. However, it goes without saying that it is also possible that at least one of the connection elements of the first endplate is a nozzle and the corresponding connection counter element of the coupling unit is an opening.

It should also be noted that all connection elements of the first endplate may be designed as nozzles or openings, but it is also possible that only some of the connection elements of the same first endplate are nozzles, while the other remaining connection elements of the same first endplate are openings. The corresponding connection counter elements are designed so that they correspond to the respective connection element they are supposed to be connected to.

According to a further preferred embodiment, the first and/or second connection counter element part is equipped with at least one sealing element which is adapted to frictionally engage with the connection element of the first endplate and/or the media providing baseplate and/or the media guiding device providing the fluid tight friction engagement. This allows for an easy and fluid tight engagement between connection element and corresponding connection counter element part.

Alternatively or additionally, at least one of the first and/or second counter element part is equipped with at least one form fit element, which is adapted to engage with a complementarily designed form fit element arranged at the connection element of the first endplate and/or the media providing baseplate and/or the media guiding device for providing a fluid tight form fit engagement. Such a form fit element may be e.g. a hook which is adapted to snap into a correspondingly formed groove. The hook is preferably designed at the adapter plate, but it is also possible that the adapter plate is equipped with the groove.

It should be further noted that it is also preferred that both a form fit element and a friction fit element are provided at the same connecting or connection counter element. This allows for an improved fluid tight engagement.

However, inserting the connection element into the connection counter element or vice versa in turn requires a lot of force which cannot or cannot easily be provided manually, which in turn hampers the installation process of the fuel cell stack into the system.

To provide a fuel cell stack assembly that allows for a quick and easy installation and removal of a fuel cell stack into a system while providing a secure leak tight seal that is not sensitive to vibration or thermal movements, at least one force receiving element and at least one force transmitting element is provided.

Further, the at least force receiving element and the at least one force transmitting element are configured to interact with one another to bring the at least one connection element and the at least one connection counter element in frictional engagement to provide a fluid tight connection between the connection element and the connection counter element.

Thereby, the at least one force receiving element may be arranged at the first endplate of the fuel cell stack, and the at least one force transmitting element may be arranged at the adapter plate. Alternatively, the at least one force transmitting element may be arranged at the first endplate of the fuel cell stack, and the at least one force receiving element may be arranged at the adapter plate. For example, the at least one force receiving element or the at least one force transmitting element may be arranged underneath the assembled fuel cell stack where there is a lot of mechanical rigidity.

Additionally or alternatively, it is also possible that the force transmitting element and the force receiving element apply the forces between the assembled stack and the media providing baseplate, wherein the adapter plate is only arranged in between and attached to the first endplate and the media providing baseplate during the force applying process. Thus, there is an embodiment preferred, wherein the at least one force receiving element may be arranged at the first endplate of the fuel cell stack, and the at least one force transmitting element may be arranged at the media providing baseplate, or vice versa.

According to a further preferred embodiment, the at least force receiving element and the at least one force transmitting element interact such that a force is transmitted between the at least force receiving element and the at least one force transmitting element that causes the fuel cell stack to move in the stacking direction. This allows for a controlled force application to the fuel cell stack and therefore reduces any risks of damaging the fuel cell stack. Furthermore, due to the generated force in the stacking direction, the fuel cell stack may be pulled in stacking direction, which also allows to insert the seals further into the connection counter element, making a very robust seal.

Preferably, the at least force receiving element and the at least one force transmitting element are further configured interact such that a force can also be applied in a direction opposite the stacking direction for removal of the fuel cell stack. This also for a quick and easy removal of the fuel cell stack from the system.

According to a further embodiment, the at least one force receiving element and the at least one force transmitting element are configured to engage with one another. That is, the at least one force receiving element and the at least one force transmitting element may be configured to mate with each other when installed. For example, the at least one force receiving element and/or the at least one force transmitting element may be a gear, a threaded element, a gear rack, a leadscrew, a bayonet coupling, a hydraulic element, a pneumatic element, a lever, angled slide plane etc.

Preferably, the fuel cell stack assembly comprises a sensor unit detecting a position of the at least force receiving element and/or the at least one force transmitting element and/or the at least one connection element and/or the at least one connection counter element. Furthermore, the fuel cell stack assembly may comprise a sensor detecting a fluid tightness between the connection element and the connection counter element.

For example, the sensor unit may be a switch that is actuated when the at least one connection element of the fuel cell stack and/or the at least one counter element reaches its final position. In particular, a part of the connection element may contact the switch that signals the system that the fuel cell stack is in place and a seal has been achieved to the outside. This also means that when a stack is removed, the system may receive a signal to close flow valves, disconnect electrical contacts, shine a warning light etc. Moreover, depending on a type of seal that is used between the connection element and the connection counter element, it may be possible for the fuel cell stack to be lifted significantly before the seal is broken, enabling switches and/or valves to actuate before the fluid ports are open to the outside. Preferably, if two or more fuel cell stacks are connected in the same fluid loop, the other ones may be not affected by this exchange.

According to a further embodiment, the fuel cell stack assembly comprises at least one locking unit configured to lock the at least force receiving element and the at least one force transmitting element. The at least one locking unit may provide an additional locking feature to further secure a position of the connection element and the connection counter element. For example, the at least one locking unit may be a lock that clamps on the at least one force receiving element, a pin lock, of the like. It is also possible that the at least one locking unit may be a separate component to both the force receiving element and the force transmitting element. Preferably, the at least one locking unit may be mechanically, pneumatically and/or hydraulically actuated. Additionally, or alternatively, the at least one locking unit may be actuated by the same movement that causes the fuel cell stack to move towards the fuel cell stack support unit.

Preferably, the at least one force transmitting element is detachable. This has the advantage that the at least one force transmitting element may be removed from the fuel cell stack assembly when the fuel cell stack has been inserted in the system. Furthermore, the same force transmitting element may then be used to insert another fuel cell stack into the system.

Alternatively, the at least one force transmitting element may include a driving unit configured to actuate the force transmitting element. In particular, each force transmitting element may include one driving unit.

According to a further preferred embodiment, the adapter plate is arranged between the first endplate and the media providing base plate, wherein the media providing baseplate is further equipped with a control unit for determining a state of engagement between the at least one connection counter element of the adapter plate and the corresponding connection element of the first endplate and/or the corresponding port or the media providing base plate, and for triggering at least one control action in the fuel cell stack assembly based on the state of engagement.

The triggering of control actions based on the state of engagement between the plates allows for quick and automatic installations and/or deinstallations of the fuel cell stack into/from the media providing base plate. This increases the safety of the operation of the fuel cell stack as e.g. media supply to the stack and/or electric power connections are only possible if the fuel cell stack is securely arranged and mounted into the media providing base plate and/or the connection element and connection counter element are in fluid tight connection.

Consequently, an embodiment is preferred, wherein the control action is a connection and/or disconnection of electrical contacts between the first endplate and the media providing baseplate and/or an automatic closing and/or opening of the at least one port being arranged in the media providing base plate, wherein the port is adapted to be connected to the corresponding second connection counter element part.

Additionally, the media providing plate may be equipped with a flow regulating valve, preferably a check valve, which interacts with the adapter plate and controls the automatic closing and/or opening of the ports. Thereby, the check valve is a normally closed check valve. The check valve provides a simple and cost effective way to open/close the ports in the media providing base plate based on the state of engagement.

Thereby it is possible that the check valve is opened by the connection counter element itself, particularly the second connection counter element part. However, it is also possible that the adapter plate is equipped with a mechanical device which mechanically opens the check valve. Further it is also possible that the opening /closing of the check valve, or of the ports in general, is triggered by an electric control command which is provided by the control unit. Then, a mechanical interaction for opening and/or closing the ports between adapter plate and its parts and the media providing base plate is not necessary.

The control unit itself may comprise a mechanical switch and/or at least one sensor such as optical sensor, and/or electronic sensor.

Besides providing an automatic connection/disconnection between the adapter plate and the media providing baseplate, the control action may also be an auditory or visual warning signal that indicates the state of engagement between the connection element and the connection counter element. This also allows for a safe attachment and fluid tight connection between adapter plate and media providing base plate which increases the operation safety of the fuel cell stack.

Further preferred embodiments are defined in the dependent claims as well as in the description and the figures. Thereby, elements described or shown in combination with other elements may be present alone or in combination with other elements without departing from the scope of protection.

In the following, preferred embodiments of the invention are described in relation to the drawings, wherein the drawings are exemplarily only, and are not intended to limit the scope of protection. The scope of protection is defined by the accompanied claims, only.

The figures show:
Fig. 1a/b: schematic illustrations of a first embodiment of the fuel cell stack assembly,
Fig. 2a/b: schematic illustrations of a second embodiment of the fuel cell stack assembly,
Fig. 3: a schematic illustration of an assembled fuel cell stack,
Fig. 4: a schematic illustration of a first embodiment of a preferred adapter plate,
Fig. 5: a schematic illustration of a further embodiment of a preferred adapter plate,
Fig. 6: a schematic illustration of a further embodiment of a preferred adapter plate,
Fig. 7: a schematic illustration of a further embodiment of a preferred adapter plate,
Fig. 8: a schematic illustration of a further embodiment of a preferred adapter plate,
Fig. 9: a schematic illustration of a further embodiment of a preferred adapter plate,
Fig. 10: a schematic illustration of a further embodiment of a preferred adapter plate,
Fig. 11: a schematic illustration of a further embodiment of a preferred adapter plate,
Fig. 12: a schematic illustration of a further embodiment of a preferred adapter plate, and
Fig. 13: a schematic illustration of a further embodiment of a preferred adapter plate.

In the following same or similar functioning elements are indicated with the same reference numerals.

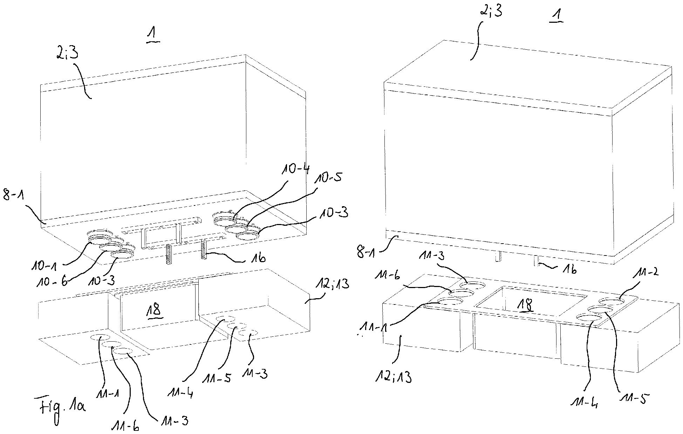

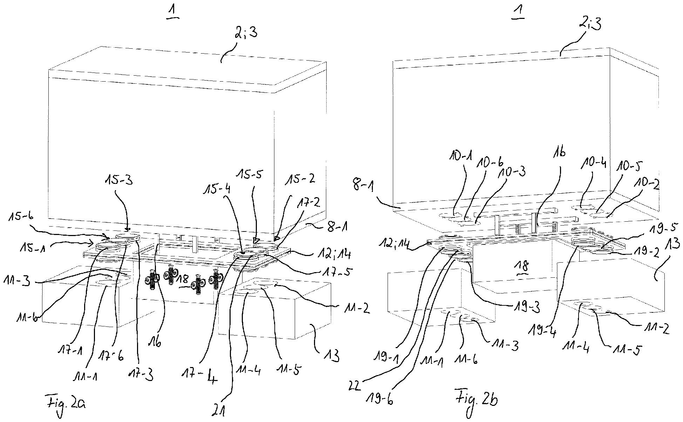

Fig. 1 and 2 show two different preferred embodiments of a fuel cell stack assembly 1, each comprising an assembled fuel cell stack 2 which is encased in a housing 3.

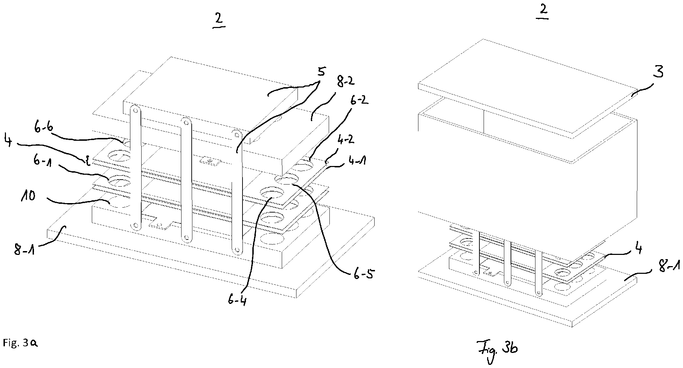

In general, the assembled fuel cell stack 2 is illustrated in Fig. 3 and comprises at least a first endplate 8-1 and a second endplate 8-2, which sandwich a plurality of unit fuel cells 4. Each unit fuel cell 4 comprises a bipolar plate 4-1 and a membrane electrode assembly 4-2, which are stacked such that two bipolar plates sandwich a multi-layer membrane electrode assembly 4-1 in a stacking direction.

For providing the assembled fuel cell stack 2, which can be handled as entity, the first and second endplate 8-1, 8-2 are clamped together by a clamping device 5, e.g. clamping bands as illustrated in Fig. 3.

For operating the fuel cell stack 2 provision of reactants to the unit fuel cells 4 is necessary. Usually, as reactants hydrogen, an oxidizing agent, such as air, and a coolant are used. For supplying the reactants to and for removing the reactants from the fuel cell stack, each bipolar plate and/or membrane electrode assembly comprises a hydrogen inlet manifold 6-1 and a hydrogen outlet manifold 6-2, an air inlet manifold 6-3 and an air outlet manifold 6-4, and a coolant inlet manifold 6-5 and a coolant outlet manifold 6-6, wherein the manifolds form respective tubelike channel inlets and channel outlets (not shown). The channel inlets and channel outlets extend through the assembled fuel cell stack 2 and are fluidly connected to respective connection elements 10-1 - 10-6 arranged at the first endplate 8-1. The clamping device 5 ensures the fluid tightness of the assembled fuel cell stack 2.

For operating the fuel cell stack, the connection elements 10-1 - 10-6 in turn are adapted to be connected to respective media ducts via a coupling unit 12, which comprise a corresponding number of ports 11-1 - 11-6 as the first endplate 8-1, which act as connection counter elements. Thereby, the coupling unit 12 may be designed as media providing baseplate 13, as is illustrated in the embodiment shown in Fig. 1, wherein the connection counter elements 11-1 - 11-2 are provided by the ports arranged in the media providing baseplate 13.

Alternatively and as shown in Fig. 2, the coupling unit 12 may be designed as adapter plate 14, which is arranged intermittently between the first endplate 8-1 and a media guiding device so that the first endplate 8-1 is connected to the adapter plate 14, via connection counter elements 15-1 - 15-2. The media guiding device may by the media providing baseplate 13, as illustrated in Fig. 1. However, in case an adapter plate is provided, the ports 11-1 - 11-6 of the media providing baseplate 13 are also connected to the connection counter elements 15-1 - 15-6 provided by the adapter plate 14.

Of course, it would also be possible to connect the connection counter elements 15 of the adapter plate 14 directly to media guiding hoses/tubes.

As can be further seen from Figs. 1 and 2, the connection elements 10 and the connection counter element 11; 15 are adapted to fit into each other in such a way that they are engaged by friction fit and/or form fit.

For that, in the illustrated embodiment of Fig. 1, the connection elements 10 of the first endplate 8-1 are designed as nozzles and the ports 1 are designed as openings, wherein the nozzles are adapted to fit into ports 11 of the media providing baseplate 13.

In contrast to that, in the illustrated embodiment of Fig. 2, the connection elements 10 are designed as openings and the connection counter elements 15 of the adapter plate 14 are designed as nozzles, wherein the nozzles 15 are adapted to fit into openings 10 of the endplate 8-1.

As can be further seen from the embodiment illustrated in Fig. 2, each connection counter element 15 of the adapter plate 14 has a first connection counter element part 17, a second connection counter element part 19, and a third connection counter element part 20, linking the first and second connection counter element parts 17; 19.

When the connection element 10 is inserted in the connection counter element 14; 17 a seal is created that ensures a fluid tight connection between the connection element 10 and the connection counter element 11; 15.

For increasing the fluid tightness, the nozzle may additionally be provided with a sealing element 21, e.g. an O-ring which frictionally engages with an inner wall of the opening 14;17 for providing the fluid tight friction engagement, as can be seen in Fig. 2. Alternatively and or additionally, such a sealing element 21 may may also be provided at the inner wall of the opening 14; 17.

As can be further seen in the embodiment of Fig. 2, the connection counter elements 17, and particularly, the second connection counter element parts 19 are equipped with a form fit element 22, e.g. a hook, which engage with a groove (not illustrated) arranged in the inner wall of the opening 14; 17.

In order to pull the fuel cell stack 2 into position, that is, to insert the connection elements 10 into the connection counter elements 11; 15, a force needs to be applied that usually exceeds the weight of the fuel cell stack 2 and/or a force that can be manually generated. Thus, several force receiving elements 16 and force transmitting elements 18 are provided that interact with one another to generate a force that is large enough to insert connection elements 10 into the connection counter elements 11; 15 such that a fluid tight connection is established.

As can be seen from Fig. 2, the force receiving elements 16 in the first embodiment are rods with gears or screws that are fastened to the first endplate 8-1 of the fuel cell stack 2 to allow for even and controlled force application. The placement underneath the fuel cell stack 2 has the advantage that there is a lot of mechanical rigidity.

The force transmitting elements 18 in the first embodiment are corresponding gears as illustrated in Fig. 1, such that, when the gears rotate, a force is transmitted between the force transmitting elements 18 and the force receiving elements 16 that causes the fuel cell stack 2 to move along the stacking direction 4. Advantageously, if the gears rotate in the opposite direction a force can also be applied in the opposite direction such that the fuel cell stack 2 can be easily removed from the that the fuel cell stack support unit 12.

Moreover, the fuel cell stack assembly 1 comprises at least one locking unit (not illustrated) configured to lock the force receiving element 16 to further secure the final position of the connection element 10 and/or the connection counter element 11; 15. This may add a redundancy and may allow to separate the locking of the final position of the fuel cell stack 2 from the moving of the fuel cell stack 2. The at least one locking unit may be a clamp that clamps on at least one of the force receiving elements 16. The locking unit may be mechanically, pneumatically and/or hydraulically actuated. Additionally, or alternatively, the at least one locking unit may be actuated by the same movement that causes the fuel cell stack 2 to move towards the coupling unit 12.

In addition, the fuel cell stack assembly 1 is provided with a sensor unit 23 (see Fig. 2a) detecting a position of the connection element 10. For example, the sensor unit 23 may be a switch that is actuated when the at least one connection element of the fuel cell stack and/or the at least one counter element reaches its final position. In particular, a part of the connection element 10 may contact the switch that signals the system that the fuel cell stack 2 is in place and a seal has been achieved to the outside. This also means that when a stack is removed, the system may receive a signal to close flow valves, disconnect electrical contacts, shine a warning light etc. Moreover, depending on a type of seal that is used between the connection element 10 and the connection counter element 11; 15, it may be possible for the fuel cell stack 2 to be lifted significantly before the seal is broken, enabling switches and/or valves to actuate before the fluid ports are open to the outside.

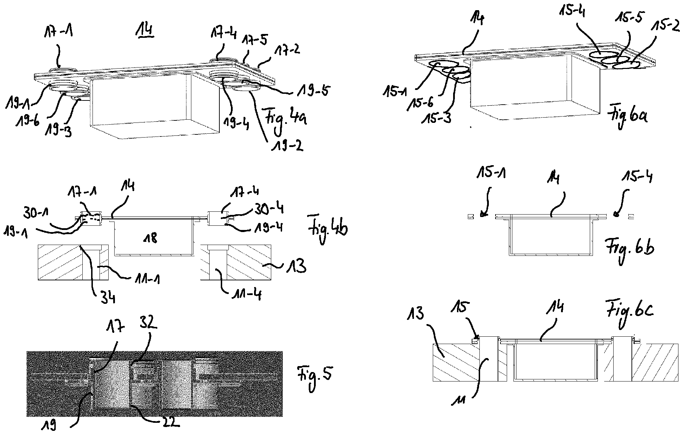

Figs. 4 to 13 illustrate various embodiments of the adapter plate 14. As illustrated in Figs. 2, and 4a and 4b, the adapter plate 14 may comprises nozzle like connecting counter elements 15, which provide a connection between the adapter plate 14 and the media baseplate 13 as well as the first endplate 8-1 (not illustrated in Fig. 4). For the fluid tight connection between the endplate 8-1 and the media providing baseplate 13, the connection counter elements comprises 3 parts, a first connection counter element part 17, which is adapted to connect to the endplate 8-1 and a second connection counter element part 19, which is adapted to connect to the baseplate 13. Both parts are linked by a third connection counter element part 30 (see Fig. 4b).

For the fluid tight connection, the connection counter elements 15 and particularly the connection counter element part 17 are 19 may be equipped with a sealing element 21 as friction fit element and/or a form fit element. In the embodiment illustrated in Fig. 5, the friction fit element is an O-ring sealing which is adapted to be accommodated in a groove 32, which is arranged in the connection counter element part 17. Thereby the O-ring is adapted to seal against an inner wall of the connection element 10 of the endplate 8-1, which is formed as opening (see Fig. 2). Additionally or alternatively, a form fit element 22 is arranged at the second connection counter element part 19. In the illustrated embodiment, the form fit element 22 is a hook, which extends circumferentially around the second connection counter element part 19. This hook may interact with an inner wall 34 of the port 11 of the media providing baseplate 13.

Alternatively and as illustrated in Fig 4, the first and second connection counter element part 17; 19 may be equipped with a sealing element 21, which frictionally engage with the inner walls 34 of the ports 11 and the connection elements 10 of the first endplate 8-1, respectively.

Instead of nozzle like connection counter element 15, the adapted plate 14 may also be equipped with openings 15, which interact with ports 11 of the media providing baseplate 13 as is illustrated in the embodiment shown in Fig. 6.a, b, c. For the interaction, the ports 11 are designed as nozzle like elements as is illustrated in Fig. 6c.

It goes without saying that it is also possible that the first connection counter element part 17 may be designed as nozzle like elements, wherein the second connection counter element part 19 is designed as opening, or vice versa.

It is also possible that only some of the first connection counter element parts 17 are designed as nozzle like elements, wherein other first connection counter element parts are designed as openings.

For example, it might be preferable to designed the inlet connection counter element parts 17-1; 17-3, 17-5 as nozzle like elements, whereas the outlet connection counter element parts 17-2; 17-4, 17-6 are designed as openings, or vice versa.

Besides providing a simple connection possibility between the endplate 8-1 and the media providing baseplate 13, the adapter plate 14 may also provide connection possibilities between different shaped, sized or dimensioned endplates, baseplates, ports and connection elements.

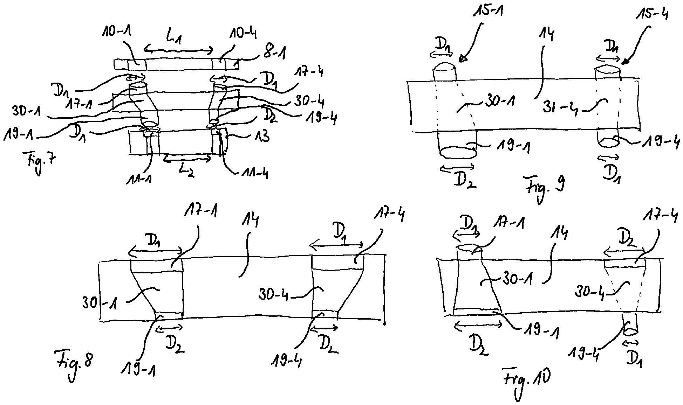

Figs. 7 to 13 illustrated various examples for adapter plates 14 connecting different sized, shaped or dimensioned plates.

As can be seen from the section view of Fig. 7, the first endplate 8-1 has, among other, two connecting elements 10-1, 10-4, which are spaced by a length L1. However, the media providing baseplate 13 has corresponding ports 11-1 and 11-4 which are spaced by a length L2, wherein L1 and L2 are not the same. Consequently, the connecting elements 10-1, 10-4 do not align with the ports 11-1, 11-4.

Therefore, the adapter plate 13 has an angled third connection counter element part 30, so that the first connection counter element part 17-1; 17-4 are offset to the second connection counter element parts 19-1; 19-4.

As can be further seen in Fig. 7, the sizes of the ports 11-1 and 11-4 are not identical, even if the sizes of the first connection counter elements part and their respective connection elements 10 of the endplate 8-1 are the same. Therefore, the third connection counter element part 30-4 is not only angled but also reduces the size of the connection counter element 15 from the size of the first connection counter element part 10-4 to the size of the second connection counter element part 19-4.

Figs. 8 to 10 illustrate further embodiments, wherein the size/location of the first connection counter element part 17 are not identical to the size/location of the second connection counter element parts 19.

In Fig. 8, the first connection counter element parts 17-1; 17-4 have a first diameter D1, whereas the second connection counter element parts 19-1; 19-4 have a second diameter D2. For adapting the first connection counter element parts 17 to the second connection counter element parts 19, the third connection counter element parts 30 diminish from the first diameter D1 to the second diameter D2.

Further, it is illustrated in Fig. 8 that all connection counter element parts 17, 30, 19 can be designed as openings.

Fig. 9 illustrates an embodiment where only one of the connection counter elements 15, namely 15-1 has different sizes. In the illustrated embodiment, the first connection counter element part 17-1 has a first diameter D1 which is smaller than the diameter of the second connection counter element part 19-1. Consequently, the third connection counter element part 30 widens from the first diameter D1 to the second diameter D2. Additionally, Fig. 9 illustrates that the other connection counter element 15-4 has a continuous size over first, second and third connection counter element parts 17-4, 19-4, 30-4. It is further illustrated that the first and second connection counter element parts are designed as nozzle like elements. However, it should be noted that, as above, at least one could also be designed as opening.

Fig. 10 illustrates an embodiment, where the connection counter elements 15-1 and 15-4 are not only differently sized, but also the first connection counter element part 17-1 and 17-4 are different. In the illustrated embodiment, one of the first connection counter element part, e.g. 17-1, is a nozzle having a first diameter D1, whereas the other first connection counter element part 17-4 is designed as opening having a diameter D1. The second connection counter element parts 19-1 and 19-4 in turn are designed as opening (19-1) with a diameter D2 and nozzle (19-4) with diameter D1. It should be noted that the second connection counter element parts 19 do not need to have the same sizes as the first connection counter element parts but could also have diameters D3 and/or D4 which differ from each other and from D1 and D2, respectively.

Besides different sizes it is also possible that the adapter plate 14 adapts be different shapes of ports 11 of the media baseplate 13 and connection elements 10 of the endplate 8-1.

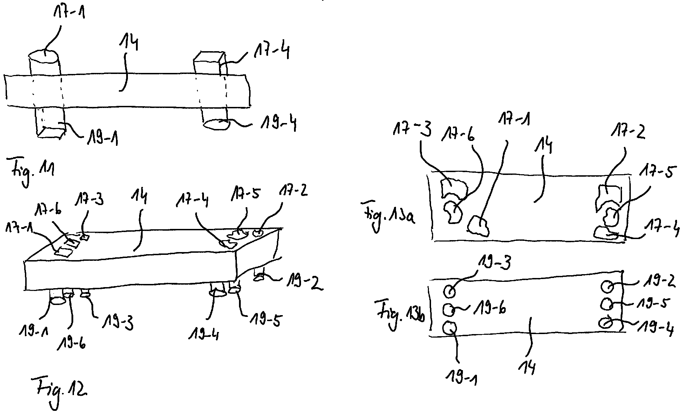

Fig. 11 illustrates an embodiment, where one of the first connection counter element part, e.g. 17-1 has a nozzle with a circular shape whereas the other first connection counter element part 17-4 has a nozzle with a rectangular shape. Additionally, it is illustrated that the corresponding second connection counter element 19-1 is rectangular, whereas the other second connection counter element 19-4 is circular.

In the illustrated embodiment of Fig. 12, the first connection counter element parts 17 are designed as openings, whereas the second connection counter element parts 19 are designed as nozzles. Additionally, Fig. 12 shows that, the openings 17 may have a rectangular (17-1, 17-6, 17-3) or even a free form shape (17-4, 17-5, 17-2), whereas the second connection counter elements 19 are all designed as nozzles having the same size and shape.

Fig. 13 illustrates a top view (Fig. 13a) and a bottom view (Fig. 13b) of another embodiment of the adapter plate 14, where the first connection counter element parts 17are designed as openings and the second connection counter element parts 19 are designed as nozzles as in Fig. 12. However, the first connection counter element part are free form for being connectable to a fuel cell stack having free form manifolds 6 and connection elements 10, whereas each of the second connection counter element parts has the same size and a circular shape which allows for a connection to a standard media providing baseplate 13 or to standard media guiding ducts.

It should be noted that the illustrated embodiments only show some embodiments of adapter plates 14 and possible combinations of differently sized, shaped or dimensioned connection counter elements and connection counter element parts.

In summary allows the suggested adapter plate 14 to provide a fluid tight connection between the first endplate 8-1 of the fuel cell stack and a media base plate or a media duct. Thereby, the fuel cell stack respectively its first endplate and the media providing base plate/media ducts do not need to have the aligned sizes, shapes and/ or dimensions, which allows for using a one-size fuel cell stack in different applications, even in applications having differently sized, shaped or dimensioned media providing baseplates/ports or media ducts.

### Reference numerals

- 1: Fuel cell stack assembly
- 2: assembled fuel cell stack
- 3: housing
- 4: unit fuel cell
- 4-1: bipolar plate
- 4-2: membrane electrode assembly
- 5: clamping means
- 6: inlet/outlet manifolds
- 6-1: hydrogen inlet manifold
- 6-2: hydrogen outlet manifold
- 6-3: air inlet manifold
- 6-4: air outlet manifold
- 6-5: coolant inlet manifold
- 6-6: coolant outlet manifold
- 8-1: first endplate
- 8-2: second endplate
- 10: connection element
- 11: connection counter element of media providing baseplate
- 12: coupling unit
- 13: media providing baseplate
- 14: adapter plate
- 15: connection counter element of adapter plate
- 16: force receiving element
- 17: first connection counter element part
- 18: force transmitting element
- 19: second connection counter element part
- 20: third connection counter element part
- 21: sealing device/friction fit element
- 22: hook/form fit element
- 23: sensor
- 30: third connection counter element part
- 32: groove
- 34: inner wall

## Claims

1. Fuel cell stack assembly (1) comprising at least
an assembled fuel cell stack (2) having at least a first endplate (8-1) and a second endplate (8-2) sandwiching a plurality of unit fuel cells, wherein each unit fuel cell comprises a membrane electrode assembly and a bipolar plate, and wherein at least the first endplate and the second endplate and the plurality of unit fuel cells are clamped together by at least one clamping means for forming the assembled fuel cell stack, wherein the first end plate (8-1) has at least one connection element (10) through which a medium for operating the fuel cell stack is guided to or from the fuel cell stack (2),
**characterized in that** the fuel cell stack assembly further comprises
an adapter plate for providing a fluid connection between a medium duct and the first endplate and having at least one connection counter element (14), wherein the connection element and the corresponding connection counter element are adapted to fit into each other in such a way that they are engaged by friction fit and/or form fit, and wherein each connection counter element has a first connection counter element part, a second connection counter element part and a third connection counter element part, wherein the first connection counter element part is adapted to engage by friction fit and/or form fit with the connection element of the first endplate, the second connection counter element part is adapted to be connected to a medium guiding device or a media providing baseplate having at least one port which is adapted to be connected to the second connection counter element part for supplying media to and removing media from the fuel cell stack, and the third connection counter element part is adapted to link the first and second connection counter element parts.

2. Fuel cell stack assembly (1) according to claim 1, wherein at least one of the first connection counter element part has a first diameter and at least one of the second connection counter element part has a second diameter, wherein the first and second diameter differ from each other.

3. Fuel cell stack assembly (1) according to claim 1 or 2, wherein at least one of the first connection counter element part has a first shape and at least one of the second connection counter element part has a second shape, wherein the first and second shape differ from each other.

4. Fuel cell stack assembly (1) according to any one of the preceding claims, wherein at least one of the first connection counter element part and at least one of the second connection counter element part are offset to each other and the third connection counter element part extends angled through the adapter plate.

5. Fuel cell stack assembly (1) according to any one of the preceding claims, wherein at least one of the first and second connection counter element parts is designed as nozzle, and the third connection counter element part is designed as channel-like tunnel linking the first and second connection counter element parts.

6. Fuel cell stack assembly (1) according to any one of the preceding claims, wherein at least one of the first and/or second connection counter element part is equipped with at least one sealing element which is adapted to frictionally engage with the at least one connection element of the first endplate and/or the at least one port of the media providing baseplate and/or the media guiding device providing the fluid tight friction engagement.

7. Fuel cell stack assembly (1) according to any one of the preceding claims, wherein at least one of the first and/or second counter element part is equipped with at least one form fit element, which is adapted to engage with a complementarily designed form fit element arranged at the at least one connection element of the first endplate and/or the at least one port of the media providing baseplate and/or at the media guiding device for providing a fluid tight form engagement.

8. Fuel cell stack assembly according to any one of the previous claims, wherein the fuel cell stack assembly further comprises at least one force receiving element (16) and at least one force transmitting element (18), wherein the at least one force receiving element (16) is arranged at the first end plate (8) and the at least one force transmitting element (18) is arranged at the adapter plate (12) and/or the media providing base plate, or wherein the at least one force receiving element (16) is arranged at the adapter plate (12) and/or at the media providing base plate and the at least one force transmitting element (18) is arranged at the first endplate (8), and
wherein the at least force receiving element (16) and the at least one force transmitting element (18) are configured to interact with one another to bring the at least one connection element (10) of the first endplate and the at least one connection counter element (14) of the adapter plate in engagement by friction fit and/or form fit for providing a fluid tight connection between the connection element (10) and the connection counter element (14).

9. Fuel cell stack assembly (1) according to any one of the previous claims, wherein the fuel cell stack assembly (1) comprises a sensor unit (22) detecting a position of the at least force receiving element (16) and/or the at least one force transmitting element (18) and/or the at least one connection element (10) and/or the at least one connection counter element (14).

10. Fuel cell stack assembly (1) according to any one of the preceding claims, wherein the adapter plate is arranged between the first endplate and the media providing base plate, wherein the media providing baseplate is further equipped with a control unit for determining a state of engagement between the at least one connection counter element of the adapter plate and the corresponding connection element of the first endplate and/or the corresponding port or the media providing base plate, and for triggering at least one control action in the fuel cell stack assembly based on the state of engagement.

11. Fuel cell stack assembly (1) according to claim 10, wherein the control action is a connection and/or disconnection of electrical contacts between the first endplate and the media providing baseplate and/or an automatic closing and/or opening of the at least one port being arranged in the media providing base plate.

12. Fuel cell stack assembly (1) according to claim 10 or 11, wherein the automatic closing and/or opening of the at least one port is regulated by a flow regulating valve, preferably a check valve, which is arranged at the media providing baseplate and interacts with the adapter plate.
